# EUROPEAN PATENT APPLICATION

(11) **EP 4 742 370 A1**
(43) Date of publication of application: **13.05.2026**
(21) Application number: 25206538.8
(22) Date of filing: 02.10.2025
(51) Int. Cl.: H01M 10/613, H01M 10/647, H01M 10/6557, H01M 10/6567, H01M 50/209

(54) **BATTERY MODULE**

(30) Priority: 07.11.2024 KR 20240157116
(71) Applicant: SAMSUNG SDI CO., LTD., Yongin-si, Gyeonggi-do 17084 (KR)
(72) Inventor: KIM, SANGYOON, 17084 YONGIN-SI (KR)
(74) Representative: Regimbeau

(57) **Abstract**

Provided is a battery module including a plurality of battery cells arranged so that main surfaces thereof face one another along a first direction and a cooling plate arranged between the plurality of battery cells, wherein the cooling plate includes a flow path through which cooling water flows therein, and a vertical cross-section of the cooling plate parallel to the first direction includes a pattern in which at least one or more types of polygons are combined.

## Description

### FIELD OF THE INVENTION

The present disclosure relates to a battery module.

### TECHNICAL BACKGROUND

Secondary batteries are batteries that can be charged and discharged, unlike primary batteries that cannot be recharged. Low-capacity secondary batteries are used in small, portable electronic devices such as smartphones, feature phones, laptops, digital cameras, and camcorders, while large-capacity secondary batteries are widely used as motor drive power supplies in hybrid cars, electric cars, or the like, and as power storage batteries. These secondary batteries include an electrode assembly including a positive electrode and a negative electrode, a case for accommodating the electrode assembly, and electrode terminals coupled to the electrode assembly.

The above-described information disclosed in the background technology of this invention is only intended to improve understanding of the background of the present disclosure and therefore may include information that does not constitute the related art.

### SUMMARY

An object of the present disclosure is to provide a battery module having improved cell-to-cell strength and shock absorption.

An object of the present disclosure is to provide a battery module having improved cooling efficiency.

However, the technical problems to be solved by the present disclosure are not limited to the problems described above, and other problems not mentioned may be clearly understood by those skilled in the art from the description of the invention described below.

According to the invention, there is provided a battery module as defined in claim 1 and in the corresponding dependent claims.

According to an aspect of the present disclosure, a battery module is disclosed, including: a plurality of battery cells arranged so that main surfaces thereof face one another along a first direction; and a cooling plate arranged between the plurality of battery cells, wherein the cooling plate includes a flow path through which cooling water flows therein, and a vertical cross-section of the cooling plate parallel to the first direction includes a pattern in which at least one or more types of polygons are combined.

According to an embodiment, the flow path may include a plurality of flow paths spaced apart from one another in a height direction of the cooling plate and arranged parallel to one another.

According to an embodiment, at least some of the plurality of flow paths may be coupled to one another.

According to an embodiment, the pattern may include at least one of a honeycomb and an auxetic structure.

According to an embodiment, the pattern may have a negative Poisson's ratio.

According to an embodiment, the plurality of battery cells are arranged along a second direction perpendicular to the first direction on a plane to form cell units, and the cell units may be arranged parallel to one another along the first direction.

According to an embodiment, the cooling plate may extend along the second direction to correspond to an entire area of a cell unit adjacent thereto.

According to an embodiment, the cooling plate may include a hollow cavity, and the flow path may be positioned inside the hollow cavity.

According to an embodiment, cross-sections of the flow paths may have honeycomb structures, and a cross-section of the cooling plate between the flow paths may have an auxetic structure.

According to an embodiment, a height of the cooling plate may be equal to or greater than a height of the battery cell.

According to an aspect of the present disclosure, a battery module is disclosed, including: a plurality of battery cells arranged along a first direction and a second direction perpendicular to the first direction; and a cooling plate positioned between the plurality of battery cells, wherein the plurality of battery cells are arranged so that main surfaces thereof face one another along the first direction, and among the plurality of battery cells, the battery cells arranged along the second direction define cell units, the cooling plate is positioned between the cell units, the cooling plate includes a flow path through which cooling water flows therein, and a vertical cross-section of the cooling plate perpendicular to the second direction includes a pattern in which at least one or more types of polygons are combined.

According to an embodiment, the flow path may include a plurality of flow paths spaced apart from one another in a height direction of the cooling plate and arranged parallel to one another.

According to an embodiment, at least some of the plurality of flow paths may be coupled to one another.

According to an embodiment, the pattern may include at least one of a honeycomb and an auxetic structure.

According to an embodiment, the pattern may have a negative Poisson's ratio.

According to an embodiment, the cell units may be arranged parallel to one another along the first direction.

According to an embodiment, the cooling plate may extend along the second direction to correspond to an entire area of a cell unit adjacent thereto.

According to an embodiment, the cooling plate may include a hollow cavity, and the flow paths may be positioned inside the hollow cavity.

According to an embodiment, cross-sections of the flow paths may have honeycomb structures, and a cross-section of the cooling plate between the flow paths may have an auxetic structure.

According to an embodiment, a height of the cooling plate may be equal to or greater than a height of the battery cell.

### BRIEF DESCRIPTION OF THE DRAWINGS

The following drawings attached to this specification illustrate preferred embodiments of the present disclosure and, together with the detailed description of the invention described below, serve to further understand the technical idea of the present disclosure. Therefore, the present disclosure should not be interpreted as being limited to matters described in such drawings in which;
FIG. 1 is a perspective view schematically illustrating an example of an arrangement of battery cells and cooling plates of a battery module according to an embodiment of the present disclosure;
FIG. 2 is a perspective view schematically illustrating an example of a battery cell of the battery module of FIG. 1;
FIG. 3 is a cross-sectional view schematically illustrating an example of a cross-section III-III' of FIG. 2;
FIG. 4 is a perspective view schematically illustrating an example of a cooling plate of the battery module according to an embodiment of the present disclosure;
FIG. 5 is a cross-sectional view schematically illustrating an example of a cross-section V-V' of FIG. 4;
FIG. 6 is a cross-sectional view schematically illustrating an example of a cross-section of a cooling plate of the battery module according to an embodiment of the present disclosure;
FIG. 7 is a cross-sectional view schematically illustrating another example of a cross-section of a cooling plate of the battery module according to an embodiment of the present disclosure;
FIG. 8 is a cross-sectional view schematically illustrating another example of a cross-section of a cooling plate of the battery module according to an embodiment of the present disclosure;
FIG. 9 is a perspective view schematically illustrating another example of an arrangement of battery cells and cooling plates of the battery module according to an embodiment of the present disclosure;
FIG. 10 is a perspective view schematically illustrating an example of an arrangement battery cells and cooling plates having an inlet and an outlet of the battery module according to an embodiment of the present disclosure;
FIG. 11 is a plan view illustrating a cooling plate having an inlet and an outlet of the battery module according to an embodiment of the present disclosure; and
FIG. 12 is an exploded perspective view schematically illustrating an example of the battery module according to an embodiment of the present disclosure.

### DETAILED DESCRIPTION

Hereinafter, preferred embodiments of the present disclosure will be described in detail with reference to the attached drawings. Prior to this, terms or words used in this specification and claims should not be interpreted as limited to usual or dictionary meanings thereof and should be interpreted as meanings and concepts that conform to the technical idea of the present disclosure based on the principle that the inventor may appropriately define the concept of the term to explain his or her own invention in the best way. Therefore, the embodiments described in this specification and the configurations illustrated in the drawings are only some of the most preferred embodiments of the present disclosure and do not represent all the technical ideas of the present disclosure. Therefore, it should be understood that there may be various equivalents and modified examples that may replace them at the time of this application.

In some embodiments, when used herein, the words "comprise", "include" and/or "comprising", "including" specify the presence of stated features, numbers, steps, operations, members, elements and/or groups thereof, but do not exclude the presence or addition of one or more other features, numbers, operations, members, elements and/or groups thereof.

In some embodiments, to aid understanding of the invention, the attached drawings are not drawn to an actual scale and the dimensions of some components may be exaggerated. In some embodiments, that are different from one another, the same reference numbers may be assigned to the same components.

Although the terms first, second, or the like are used to describe various components, these components are not limited by these terms. These terms are only used to distinguish one component from another, and unless otherwise stated, it goes without saying that a first component may also be a second component.

Throughout the specification, unless otherwise specifically stated, each element may be singular or plural.

A configuration being placed "at a top (or at a bottom)" of a component or "on (or below)" a component may mean not only that any configuration is placed in contact with an upper surface (or a lower surface) of the component, but also that other configurations may be interposed between the component and any configuration placed on (or below) the component.

In some embodiments, in case that it is described that a component is "coupled," "bonded," or "connected" to another component, it should be understood that the components may be directly coupled or connected to one another, but that other components may also be "interposed" between each component, or that each component may be "coupled," "bonded," or "connected" through other components. In some embodiments, when we say that a part is electrically coupled to another part, this may include not only cases where they are directly coupled, but also cases where they are coupled with another element in between.

Hereinafter, embodiments of the present disclosure will be described in detail with reference to the attached drawings. When describing with reference to the drawings, identical or corresponding components will be given the same drawing reference numerals.

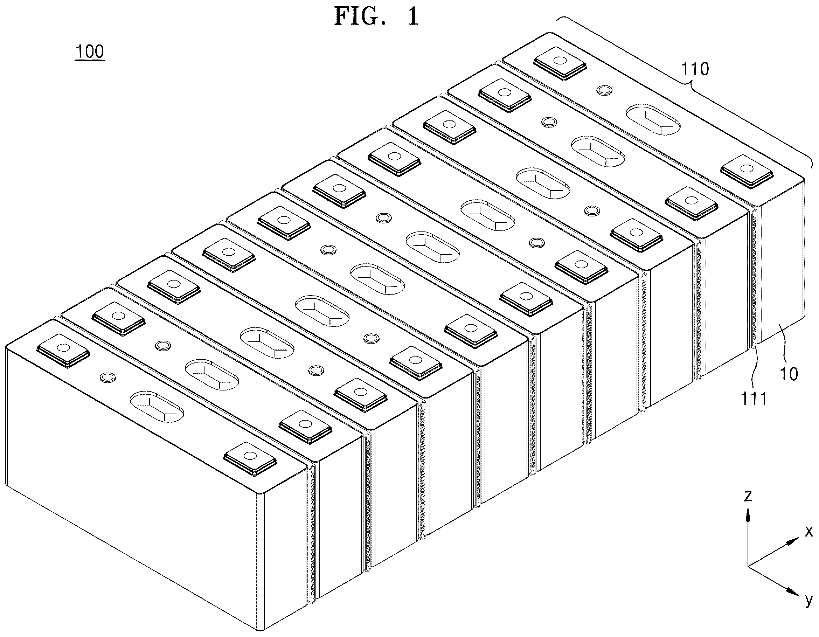

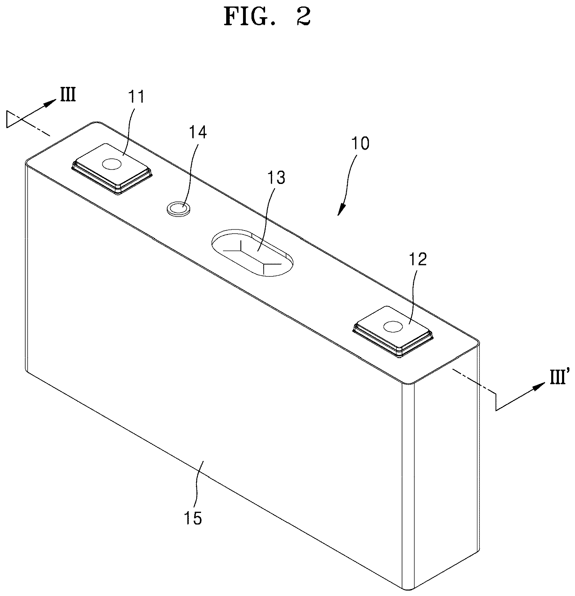

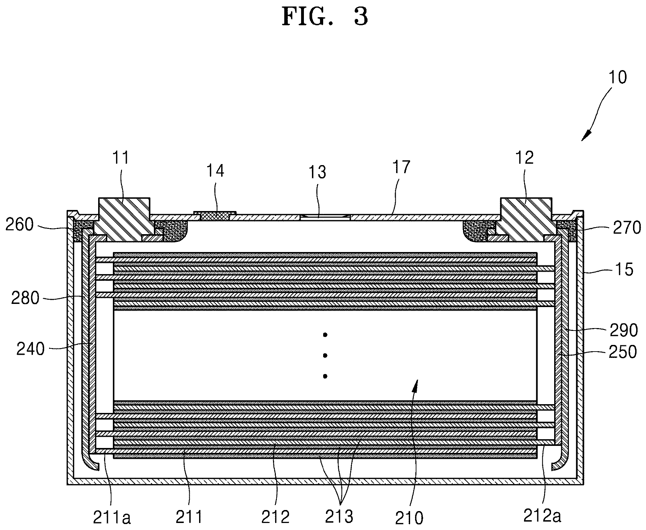

FIG. 1 is a perspective view schematically illustrating an example of an arrangement of battery cells and cooling plates of a battery module according to an embodiment of the present disclosure, FIG. 2 is a perspective view schematically illustrating an example of a battery cell of the battery module of FIG. 1, and FIG. 3 is a cross-sectional view schematically illustrating an example of a cross-section III-III' of FIG. 2.

Referring to FIG. 1, a battery module 100 of the present disclosure according to an aspect may include a plurality of battery cells 10 arranged so that main surfaces thereof face one another along a first direction x and a cooling plate 111 positioned between the plurality of battery cells 10, wherein the cooling plate 111 includes a flow path 112 through which cooling water flows therein, and a vertical cross-section of the cooling plate 111 parallel to the first direction x may include a pattern in which at least one or more types of polygons are combined.

Referring to FIGS. 2 and 3, a battery cell 10 may include a case 15 of the battery, an electrode assembly 210 housed inside the case 15 of the battery, and an electrolyte. The electrode assembly 210 and the electrolyte may react electrochemically to generate energy.

One side of the battery cell 10 may be provided with terminal portions 11 and 12 electrically coupled to a connection tab, a vent 13 as a passage for discharging gas generated internally, and an electrolyte injection port 14 for injecting an electrolyte into the battery case 15. The terminal portions 11 and 12 of the battery cell 10 may be a first terminal 11 and a second terminal 12 having different polarities. In some embodiment, in case that the first terminal 11 is a positive terminal, the second terminal 12 may be a negative terminal, and conversely, in case that the first terminal 11 is a negative terminal, the second terminal 12 may be a positive terminal. That is, the first terminal 11 and the second terminal 12 have electrically different polarities and are not limited to a specific polarity.

Terminal portions 11 and 12 of battery cells 10 adjacent to one another may be electrically coupled in series and/or in parallel due to a connection tab. In some embodiments, a first terminal 11 of one battery cell 10 may be electrically coupled to a second terminal 12 of another battery cell 10 adjacent thereto through a connection tab, and a second terminal 12 of the one battery cell 10 may be electrically coupled to a first terminal 11 of another battery cell 10 adjacent thereto through another connection tab.

In some embodiments, although connections of battery cells are exemplarily illustrated in FIGS. 1, 9, 10, and 12, it is not limited to these structures and various connection structures may be adopted as needed. In some embodiments, the number and arrangement of battery cells are not limited to the structures illustrated in FIGS. 1, 9, 10, and 12, and may be changed as needed.

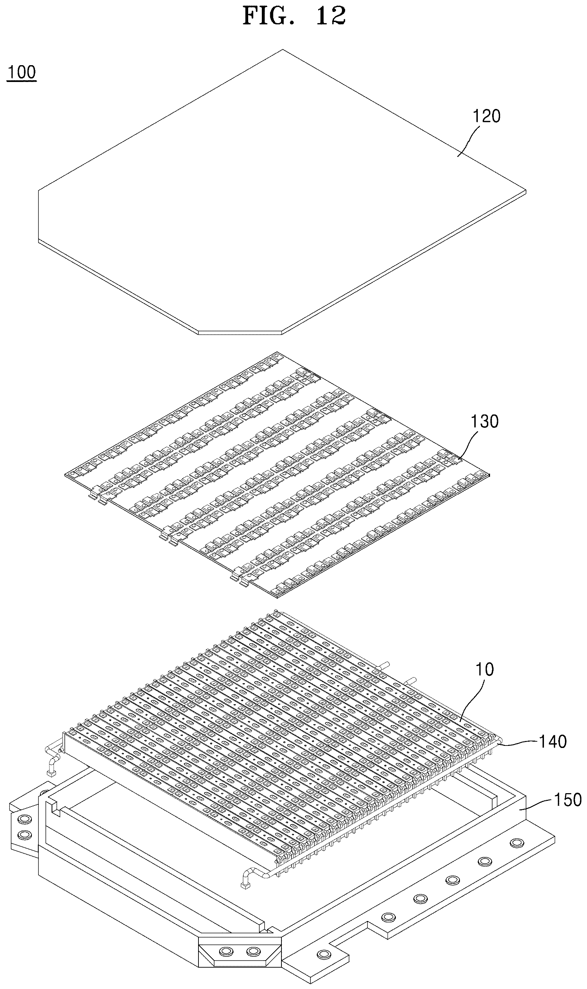

A plurality of battery cells 10 may be arranged in one direction x so that main surfaces, which are wide surfaces of the battery cells 10, face one another, and the plurality of battery cells 10 arranged in this manner may be accommodated by a housing 150 (see FIG. 12).

The housing 150 may include a pair of end plates facing wide surfaces of battery cells 10, and a side plate and a bottom plate joining the pair of end plates.

The side plate may support sides of the battery cells 10, and the bottom plate may support bottom surfaces of the battery cells 10. In some embodiments, the pair of end plates, the side plate and the bottom plate may be joined by a member such as a bolt.

In some embodiments, a battery cell 10 according to an embodiment of the present disclosure may include at least one electrode assembly 210 in which a first electrode plate 211 and a second electrode plate 212 including a plurality of sheets are alternately laminated with a separator 213 in between, and a case 15 in which the electrode assembly 210 is housed.

The first electrode plate 211 and the second electrode plate 212 of the battery cell 10 may have different polarities. In some embodiments, in case that a first electrode plate 211 is a positive electrode, a second electrode plate 212 may be a negative electrode, and conversely, in case that the first electrode plate 211 is a negative electrode, the second electrode plate 212 may be a positive electrode. That is, the first electrode plate 211 and the second electrode plate 212 have electrically different polarities and are not limited to a specific polarity.

The battery cell 10 according to an embodiment is described as a square lithium ion battery cell as an example. However, the present disclosure is not limited thereto, and the present disclosure may be applied to various types of battery cells such as lithium polymer battery cells or cylindrical battery cells.

The first electrode plate 211 and the second electrode plate 212 may include a coated portion, which is an area where an active material is applied to a current collector including a metal foil of a thin plate, and a first non-coated portion 211a and a second non-coated portion 212a, which are areas where the active material is not coated.

The electrode assembly 210 may include a structure in which a first electrode plate 211 and a second electrode plate 212 including a plurality of sheets are alternately laminated with a separator 213 in between. However, the present disclosure is not limited thereto, and the first electrode plate 211 and the second electrode plate 212 may be wound after being interposed between a separator 213 which is an insulator.

The case 15 may include the overall appearance of the battery cell 10 and may include a conductive metal such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 may include conductive materials. In this regard, the first terminal 11 and the second terminal 12 electrically coupled to the first electrode plate 211 or the second electrode plate 212 may be installed to protrude outward by penetrating through the cap plate 17.

In some embodiments, outer main surfaces of upper pillars of the first terminal 11 and the second terminal 12 protruding outward from the cap plate 17 may be threaded and fixed to the cap plate 17 with nuts.

However, the present disclosure is not limited thereto, and the first terminal 11 and the second terminal 12 may include rivet structures and be riveted or may be welded to the cap plate 17.

In some embodiments, the cap plate 17 may include a thin plate and be joined to the opening of the case 15, and an electrolyte injection port 14 into which a sealing plug may be installed may be formed in the cap plate 17, and a vent 13 having a notch may be installed.

The first terminal 11 and the second terminal 12 may be electrically coupled to a current collector including a first current collector 240 and a second current collector 250 welded to a first non-coated portion 211a of the first electrode plate and a second non-coated portion 212a of the second electrode plate.

In some embodiments, the first terminal 11 and the second terminal 12 may be welded to the first current collector 240 and the second current collector 250, respectively. However, the present disclosure is not limited thereto, and the first terminal 11 and the second terminal 12 and the first current collector 240 and the second current collector 250 may be formed by being integrally combined.

In some embodiments, an insulation member may be installed between the electrode assembly 210 and the cap plate 17. In this regard, the insulation member may include a first lower insulation member 260 and a second lower insulation member 270, and each may be installed between the electrode assembly 210 and the cap plate 17.

In some embodiments, according to an embodiment, one end of a separation member capable of being installed facing one side of the electrode assembly 210 may be installed between the insulation member and the first terminal 11 and the second terminal 12. In this regard, the separation member may include a first separation member 280 and a second separation member 290.

Accordingly, one of the ends of the first separation member 280 and the second separation member 290 capable of being installed facing one side of the electrode assembly 210 may be installed between the first lower insulation member 260 and the second lower insulation member 270 and the first terminal 11 and the second terminal 12.

Finally, the first terminal 11 and the second terminal 12 welded to the first current collector 240 and the second current collector 250 may be joined to the first lower insulation member 260 and the second lower insulation member 270 and the one of the ends of the first separation member 280 and the second separation member 290.

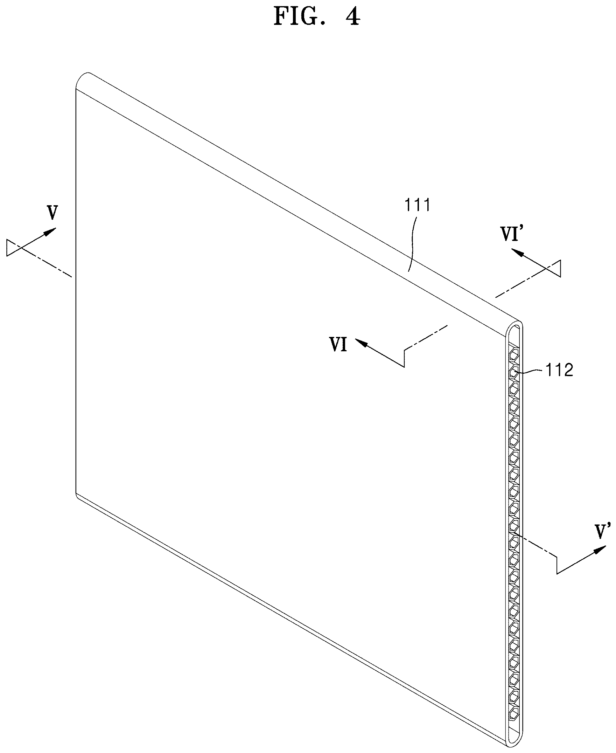

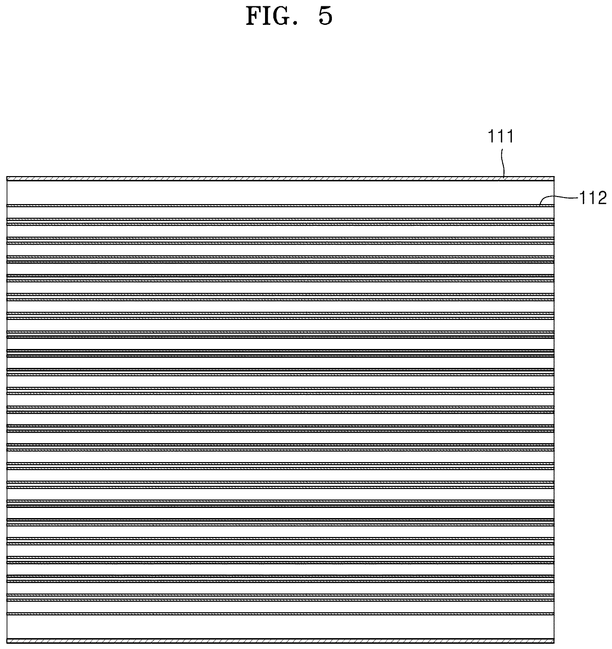

FIG. 4 is a perspective view schematically illustrating an example of a cooling plate of the battery module according to an embodiment of the present disclosure, and FIG. 5 is a cross-sectional view schematically illustrating an example of a cross-section V-V' of FIG. 4.

A cooling plate 111 may manage and cool heat generated from a battery cell to lower temperature. The cooling plate 111 of the present disclosure may be positioned between a plurality of battery cells 10 and face main surfaces thereof, which are wide surfaces of the battery cells, to cool them.

Referring to FIGS. 4 and 5, a cooling plate 111 may include a flow path 112 through which cooling water flows therein. The cooling plate 111 may include a hollow cavity, and the flow path 112 may be positioned inside the hollow cavity. In some embodiments, the flow path 112 may include a plurality of flow paths which are spaced apart from one another in a height direction of the cooling plate 111 and arranged parallel to one another.

Although not limited thereto, at least some of the plurality of flow paths 112 may be connected to one another, so that a flow direction of the cooling water flowing through the flow paths 112 may be changed depending on whether the plurality of flow paths 112 are connected. The plurality of flow paths 112 may be connected by a sub-flow path (not shown) connecting each of the plurality of flow paths 112.

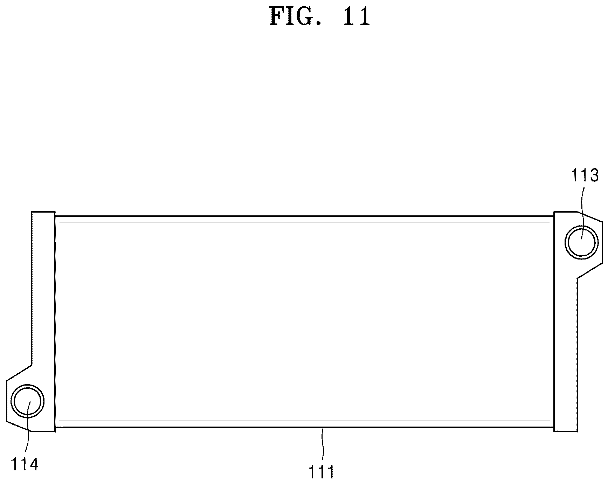

In some embodiments, although not limited thereto, the cooling plate 111 may further include an inlet 113 for supplying cooling water to a flow path 112 and an outlet 114 for discharging cooling water from the flow path 112, as shown in FIG. 11.

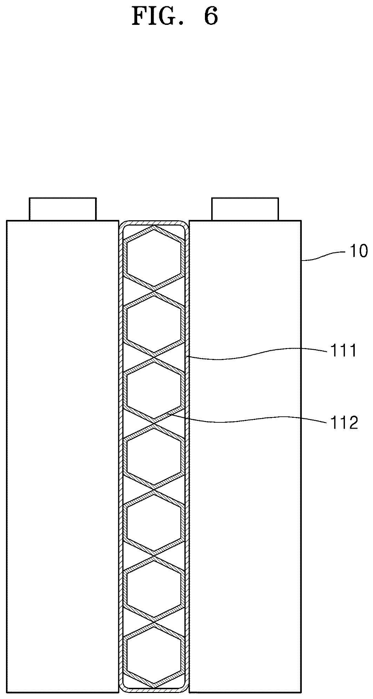

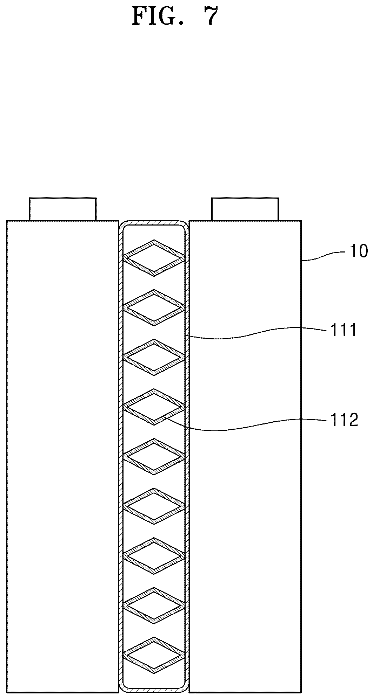

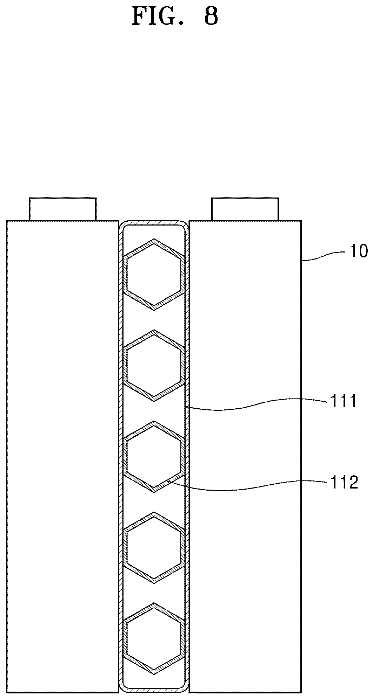

FIG. 6 is a cross-sectional view schematically illustrating an example of a cross-section of a cooling plate of the battery module according to an embodiment of the present disclosure, FIG. 7 is a cross-sectional view schematically illustrating another example of a cross-section of a cooling plate of the battery module according to an embodiment of the present disclosure, and FIG. 8 is a cross-sectional view schematically illustrating another example of a cross-section of a cooling plate of the battery module according to an embodiment of the present disclosure. FIGS. 6 to 8 illustrate various examples of the VI-VI' cross-section of FIG. 4.

A vertical cross-section of the cooling plate 111 parallel to the first direction x may include a pattern in which at least one or more types of polygons are combined. Such a pattern may be made by the cooling plate 111 and flow paths 112 positioned inside the cooling plate 111. In some embodiments, the vertical cross-section of the cooling plate 111 without the flow path 112 may have a shape such as an oval, a square, or a square with rounded corners, but is not limited thereto.

Referring to FIGS. 6, 7 and 8, the vertical cross-section of the cooling plate 111 parallel to the first direction x may include a pattern in which at least one or more types of polygons are combined, and the pattern may include at least one of a honeycomb and an auxetic structure.

The honeycomb structure is a hexagonal structure that is economical so that it may secure maximum space with minimum materials, while also being a stable structure that may distribute power in a balanced manner, allowing the cooling plate 111 to be stably maintained against external pressure.

Referring to FIG. 6, a pattern included in a vertical cross-section of a cooling plate 111 of the battery module 100 according to an embodiment of the present disclosure may include a honeycomb structure.

In some embodiments, but not limited thereto, in order for the pattern to include a honeycomb structure, cross-sections of flow paths 112 inside the cooling plate 111 may be hexagons and flow paths 112 may be arranged in a height direction of the cooling plate 111 so that one corner of each of the hexagons is in contact with one corner of at least one adjacent hexagon. Center portions of the hexagons having the honeycomb structure are formed perpendicular to main surfaces of battery cells, which may be effective in improving the compressive strength compared to existing insulating materials. In some embodiments, heat trapped between the hexagons may be effectively cooled by passing cooling water through the hexagonal flow paths 112.

An auxetic structure is a structure made by an arrangement of concave hexagons, similar to an hourglass shape, and may have a negative Poisson' ratio. A Poisson' ratio is a ratio of a transversal strain to a longitudinal strain when a vertical stress is applied to a material. A negative Poisson' ratio means that a material expands transversely within an elastic range when stretched and contracts transversely when compressed. A material with a negative Poisson's ratio may have excellent elastic modulus, rupture resistance, elasticity, and toughness.

Referring to FIG. 7, a pattern included in a vertical cross-section of a cooling plate 111 of the battery module 100 according to an embodiment of the present disclosure may include an auxetic structure. In some embodiments, the pattern included in the vertical cross-section of the cooling plate 111 of the battery module 100 according to an embodiment of the present disclosure may have a negative Poisson's ratio structure.

In some embodiments, but not limited thereto, in order for the pattern to include an auxetic structure or a negative Poisson's ratio structure, cross sections of flow paths 112 of the cooling plate 111 may be a quadrilateral, and the flow paths 112 may be arranged spaced apart from one another in a height direction of the cooling plate 111 so that the cross section of the cooling plate 111 between the flow paths 112 has an auxetic structure. Due to the auxetic structure or negative Poisson's ratio structure, structural strength and shock absorbency of the battery module 100 are improved, so that the stability of the battery module 100 may be improved.

Referring to FIG. 8, the pattern included in the vertical cross-section of the cooling plate 111 of the battery module 100 according to an embodiment of the present disclosure may include a honeycomb and an auxetic structure. In some embodiments, the cross sections of the flow paths 112 may have honeycomb structures, and the cross section of the cooling plate 111 between the flow paths 112 may have an auxetic structure.

According to an embodiment, the flow paths 112 inside the cooling plate 111 to include the structure may have a hexagonal cross-section, and the flow paths 112 may be arranged spaced apart from one another in the height direction of the cooling plate 111 so that the cross-section of the cooling plate 111 between the flow paths 112 has an auxetic structure. In case that both a honeycomb structure and an auxetic structure are included, the compressive strength and cooling effect of the battery module 100 may be improved while the effective press-fit and shear resistance may be improved.

Referring again to FIG. 1, according to an embodiment, the plurality of battery cells 10 are arranged along the first direction x on a plane to form cell units 110, and may be arranged parallel to each other. According to an embodiment, the plurality of battery cells 10 are arranged along a second direction y perpendicular to the first direction x on a plane to form cell units 110, and the cell units 110 may be arranged parallel to one another along the first direction. For example, referring to FIG.1, one battery cell 10 may form the cell unit 110.

The cooling plate 111 may be arranged between battery cells adjacent thereto to correspond to an area of each battery cell, but the cooling plate 111 may also extend along the second direction y to correspond to an entire area of a cell unit 110 adjacent thereto. When the cooling plate 111 is arranged to extend along the second direction y to correspond to the entire area of the cell unit 110 adjacent thereto, it may be more effective in forming a uniform and efficient cooling effect for an entire battery cell 10 forming the cell unit 110.

The battery module 100 of the present disclosure has a cooling plate 111 positioned between a plurality of battery cells 10, so that the cooling plate 111 is positioned so as to correspond to main surfaces, which are wide surfaces of the battery cells 10, thereby enabling face-to-face cooling. By the configuration, the battery module 100 of the present disclosure may be effective in making the temperature between battery cells uniform and may reduce the maximum temperature of the battery cells, thereby improving cooling efficiency.

According to an embodiment, a height of the cooling plate 111 of the battery module 100 of the present disclosure may be equal to or greater than a height of the battery cells 10. In case that the height of the cooling plate 111 is equal to or greater than the height of the battery cells 10, it may be more effective in equalizing the temperature between the battery cells 10 or between upper and lower portions of the battery cells than that the height of the cooling plate 111 is lower than the height of the battery cells 10, and it may be more effective in equalizing strength between the battery cells 10 or between the upper and lower portions of the battery cells.

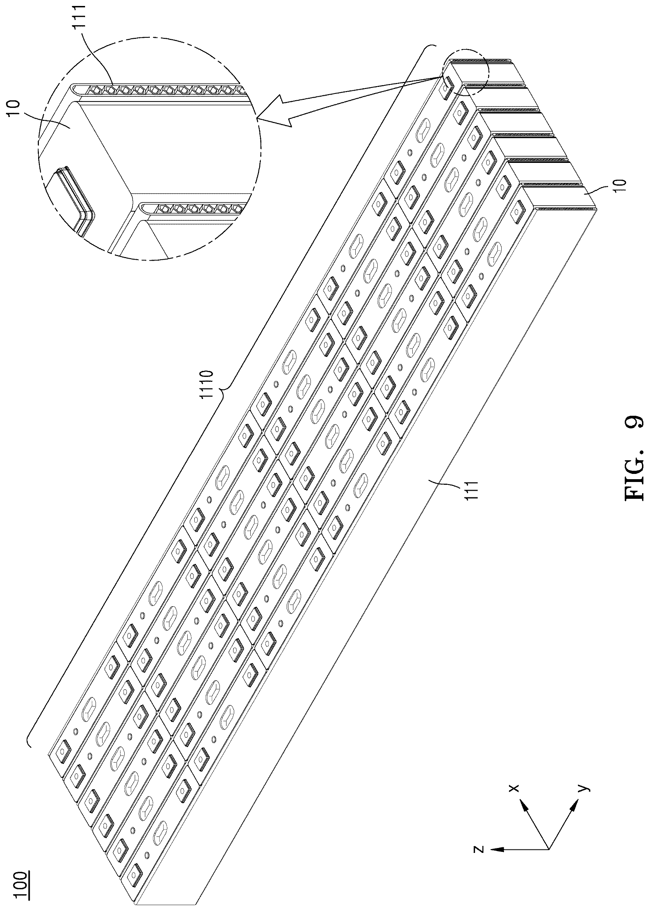

FIG. 9 is a perspective view schematically illustrating another example of an arrangement of battery cells and cooling plates of the battery module according to an embodiment of the present disclosure.

Referring to FIG. 9, a battery module 100 according to an aspect of the present disclosure may include a plurality of battery cells 10 arranged along a first direction x and a second direction y perpendicular to the first direction x, and a cooling plate 111 positioned between the plurality of battery cells 10, wherein the plurality of battery cells 10 are arranged so that main surfaces thereof face one another along the first direction x, and among the plurality of battery cells 10, the battery cells 10 arranged along the second direction y define cell units 1110, and the cooling plate 111 is positioned between the cell units 1110, the cooling plate 111 may include flow paths 112 through which cooling water flows therein, and a vertical cross-section of the cooling plate 111 perpendicular to the second direction y may include a pattern in which at least one or more types of polygon are combined.

According to an embodiment, the plurality of battery cells 10 may be arranged along the second direction y on a plane to form cell units 1110, and the cell units 1110 may be arranged parallel to one another along the first direction x. In some embodiments, the plurality of battery cells 10 may be arranged so that sides thereof are in contact with one another along the second direction y on a plane to form cell units 1110, and the cell units 1110 may be arranged parallel to one another along the first direction x.

In some embodiments, the cooling plate 111 may extend along the second direction y to correspond to an entire area of a cell unit 1110 adjacent thereto. When the cooling plate 111 is arranged to extend along the second direction y to correspond to the entire area of the cell unit 1110 adjacent thereto, it may be more effective in forming a uniform and efficient cooling effect for an entire battery cell 10 forming the cell unit 1110.

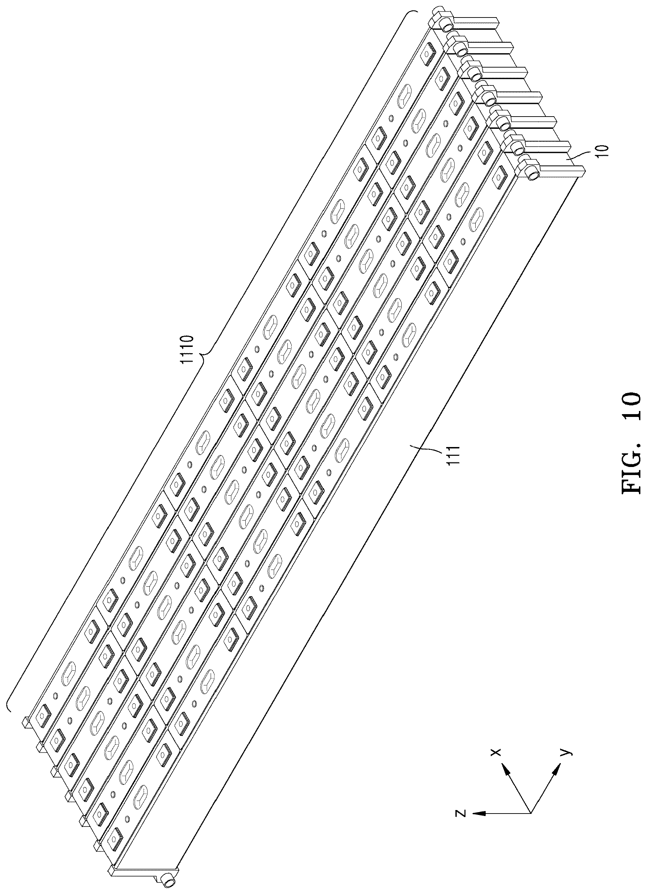

FIG. 10 is a perspective view schematically illustrating an example of an arrangement of battery cells and cooling plates having inlets and outlets of the battery module according to an embodiment of the present disclosure and FIG. 11 is a plan view illustrating a cooling plate having an inlet and an outlet of the battery module according to an embodiment of the present disclosure, and FIG. 12 is an exploded perspective view schematically illustrating an example of the battery module according to an embodiment of the present disclosure.

Referring to FIGS. 10 and 11, the cooling plate 111 may include an inlet 113 for supplying cooling water to a flow path 112 and an outlet 114 for discharging cooling water from a flow path 112. That is, the flow path 112 may also be joined to the inlet 113 and the outlet 114 to supply or discharge cooling water, and the cooling plate 111 may further include a sub-flow path (not shown) connecting each of the inlet 113 and the outlet 114 and the flow path 112.

The inlet 113 and the outlet 114 may be positioned at least one of an upper portion, a side portion, and a lower part of the cooling plate 111, and it may be more suitable for the inlet 113 to be positioned at the side portion or the upper portion of the cooling plate 111, and for the outlet 114 to be positioned at the side portion or the lower portion of the cooling plate 111. In some embodiments, the inlet 113 is positioned at an upper portion of the side portion of the cooling plate, and the outlet 114 is positioned at a lower part of the side portion of the cooling plate 111, so that cooling water supplied from the inlet 113 may flow from the upper portion to the lower portion of the cooling plate 111 through a flow path 112.

Although not limited thereto, at least some of the plurality of paths may be connected to one another, so that a flow direction of cooling water flowing through a flow path 112 may be changed depending on whether the plurality of flow paths are connected. The cooling efficiency of the cooling plate 111 may be maximized by the direction in which cooling water flows through a flow path 112.

Referring to FIG. 12, the battery module 100 according to an embodiment of the present disclosure may include an upper cover 120, a busbar holder 130, a cell unit 1110(see FIG. 10) including a plurality of battery cells 10, and a housing 150 accommodating the plurality of battery cells 10 or the cell unit 1110.

The upper cover 120 may form an internal space of a battery module 100 by bonding a plurality of battery cells 10 with a housing 150 or the like and may protect an internal configuration of the battery module 100, such as a plurality of battery cells 10, a plurality of cell units 1110, and a busbar holder 130 inside the battery module 100, from mechanical shock, thermal shock, or the like.

The busbar holder 130 is configured to support busbars electrically coupling terminal portions between battery cells 10, which are adjacent to one another, and may be positioned at a bottom of the upper cover 120.

In some embodiments, the battery module 100 according to an embodiment of the present disclosure may have a cooling pipe 140 including cooling water to be supplied to flow path 112 of cooling plates 111 positioned near the cooling plates 111.

The battery module according to an embodiment of the present disclosure described above has been described with respect to a battery module including a plurality of battery cells but is not limited thereto and it may also be applied to a battery pack including a plurality of battery modules capable of arranging a plurality of battery cells or a battery pack including a plurality of battery cells.

According to an embodiment, the battery module of the present disclosure may have improved cell-to-cell strength and shock absorbency.

According to an embodiment, the battery module of the present disclosure may have improved cooling efficiency.

According to an embodiment, the battery stability of the present disclosure may be improved.

However, the effects obtainable through the present disclosure are not limited to the effects described above, and other technical effects not mentioned will be clearly understood by those skilled in the art from the description of the invention described below.

Although the present invention has been described above by means of limited embodiments and drawings, the present invention is not limited thereto, and it is obvious that various modifications and variations are possible within the scope of the technical idea of the present invention and the equivalent scope of the patent claims to be described below by a person skilled in the art to which the present invention pertains.

## Claims

1. A battery module (100) comprising:
a plurality of battery cells (10) arranged so that main surfaces thereof face one another along a first direction; and
a cooling plate (111) arranged between the plurality of battery cells (10),
wherein the cooling plate (111) includes a flow path (112) through which cooling water flows therein, and
a vertical cross-section of the cooling plate (111) parallel to the first direction includes a pattern in which at least one or more types of polygons are combined.

2. The battery module of claim 1, wherein
the flow path (112) comprises a plurality of flow paths which are spaced apart from one another in a height direction of the cooling plate (111) and arranged parallel to one another.

3. The battery module of claim 2, wherein:
at least some of the plurality of flow paths are connected to one another.

4. The battery module of any one of claims 1 to 3, wherein
the pattern includes at least one of a honeycomb and an auxetic structure.

5. The battery module of any one of claims 1 to 4, wherein
the pattern has a negative Poisson's ratio.

6. The battery module of any one of claims 1 to 5, wherein
the plurality of battery cells (10) are arranged along a second direction perpendicular to the first direction on a plane to form cell units (110), and
the cell units (110) are arranged parallel to one another along the first direction.

7. The battery module of claim 6, wherein
the cooling plate (111) extends along the second direction to correspond to an entire area of a cell unit (110) adjacent thereto.

8. The battery module of any one of claims 1 to 7, wherein
the cooling plate (111) includes a hollow cavity and the flow path (112) is arranged inside the hollow cavity.

9. The battery module of claim 8, wherein: a cross-section of the flow path (112) has a honeycomb structure, and a cross-section of the cooling plate between the flow paths has an auxetic structure.

10. The battery module of any one of claims 1 to 9, wherein
a height of the cooling plate (111) is equal to or greater than a height of the battery cell (10).

11. The battery module of any one of claims 1 to 10 comprising:
a plurality of battery cells (10) arranged along the first direction and a second direction perpendicular to the first direction; and wherein
a vertical cross-section of the cooling plate (111) perpendicular to the second direction includes a further pattern in which at least one or more types of polygons are combined.

12. The battery module of claim 11, wherein, among the plurality of battery cells (10), battery cells (10) arranged along the second direction define cell units (110), and
the cooling plate is positioned between the cell units (110).

13. The battery module of any one of claims 11 to 12, wherein
the further pattern includes at least one of a honeycomb and an auxetic structure.

14. The battery module of any one of claims 11 to 13, wherein
the further pattern includes a negative Poisson's ratio.
